Europäisches Patentamt

European Patent Office

Office européen des brevets

(19)

(11) **EP 1 162 857 A2**

(12) **EUROPEAN PATENT APPLICATION**

(43) Date of publication:
**12.12.2001 Bulletin 2001/50**

(51) Int Cl.$^7$: **H04Q 11/00**, H04Q 11/04

(21) Application number: **01104436.9**

(22) Date of filing: **27.02.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **07.06.2000 JP 2000171157**

(71) Applicant: **FUJITSU LIMITED**
**Kawasaki-shi, Kanagawa 211-8588 (JP)**

(72) Inventors:
• **Moriya, Ryuichi, Fujitsu Limited**
**Kawasaki-shi, Kanagawa 211-8588 (JP)**

• **Matsui, Hideki, Fujitsu Limited**
**Kawasaki-shi, Kanagawa 211-8588 (JP)**
• **Takeguchi, Koji, Fujitsu Limited**
**Kawasaki-shi, Kanagawa 211-8588 (JP)**
• **Rikitake, Nobuhiro, Fujitsu Limited**
**Kawasaki-shi, Kanagawa 211-8588 (JP)**
• **Morita, Hirotaka, Fujitsu Limited**
**Kawasaki-shi, Kanagawa 211-8588 (JP)**

(74) Representative: **HOFFMANN - EITLE**
**Patent- und Rechtsanwälte**
**Arabellastrasse 4**
**81925 München (DE)**

(54) **Network managing method, network node apparatus and mesh-type network**

(57) In a mesh-type network (1), a managing section (14) manages QoS (Quality of Service) information (Q), which is accumulated QoS information (inter-neighboring-node QoS information (q)) between neighboring node apparatuses (2-i) (i=1, 2, 3 ... N), about QoS for candidate signal transmission routes in the network (1) at the individual node apparatuses (2-i). And a control section (13) controls a signal transmission route selection operation at the self node apparatus (2-i) based on the network QoS information (Q) being managed by the managing section (14). With this construction, it is possible to set/manage a line route satisfying a desired QoS independently at the individual node apparatuses with maximum ease and flexibleness.

**FIG. 4**

10: OPTICAL INTERFACE SECT.
11: OPTICAL TRANSPORT UNIT
12: SWITCH
110: NETWORK CONSTRUCTION CHANGE DETECTING SECT.
111: FRAME ASSEMBLING/DIASSEMBLING SECT.

**Description**

BACKGROUND OF THE INVENTION

(1) Field of the Invention:

The present invention relates to a network managing method, a network node apparatus and a mesh-type network, and more particularly to those suitable for optical fiber communication network.

(2) Description of Related Art:

Nowadays, in an optical fiber communication network (hereinafter also called "network"), voice data and other data are transmitted in various protocols, such as STM (Synchronous Transfer Mode), ATM (Asynchronous Transfer Mode) or IP (Internet Protocol), using a transmission system, such as SDH (Synchronous Digital Hierarchy) or SONET (Synchronous Optical NETwork), as the core. Further, as WDM (Wavelength Division Multiplexing) technology advances, large-capacity optical fiber communication networks have been realizing by multi-wavelength multiplexing transmission, e.g. 64-wavelength or 128-wavelength.

In the meantime, as symbolized by recent expansion of the Internet, with an increasing data traffic and a growing variety of services, it is becoming more significant that the optical fiber communication network has to be large in capacity and, in addition, to meet various demands, such as reliability of network and control matching the service. It is also becoming essential to flexibly cope with the increasing capacity (due to addition of a node and addition of a wavelength) after the network has been constructed.

Paying attention to the reliability of network, the optical fiber communication network according to SONET or SDH is exemplified, as an automatic restoring network being aimed at traffic protection during occurrence of a trouble, by a line-type 1+1 switched network by MSP (Multiplex Section Protection)/APS (Automatic Protection Switch) and a ring-type network, such as 2F-BLSR (2-Fiber-Bi-directional Line Switched Ring), 4F-BLSR or UPSR (Uni-directional Path Switched Ring), all standardized by a standardization organization, such as ITU-T (International Telecommunication Union-Telecommunication sector).

The line-type 1+1 switched network and the 2F-BLSR network will now be generally described as examples.

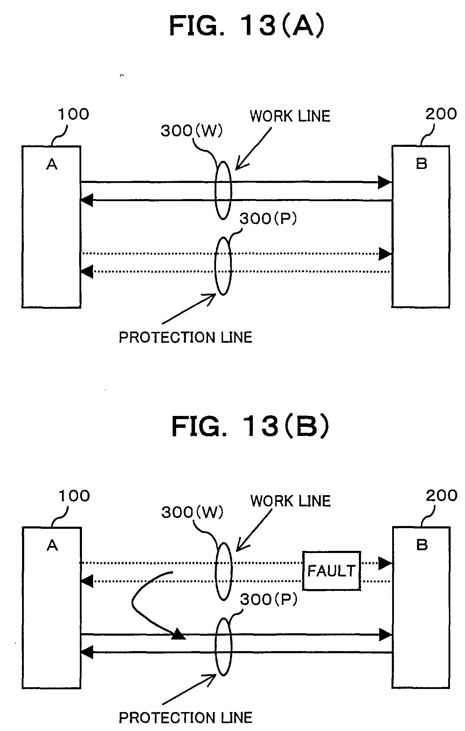

First of all, in the line-type 1+1 switched network, as shown in FIG. 13(A) of the accompanying drawings, a pair of physical lines (optical fibers) 300 is disposed between confronting node apparatuses (hereinafter also called "nodes") 100, 200; during normal operation, one physical line is used as a work line 300(W), and the other physical line is kept idle to be used as a protection line 300 (P). When a trouble happens to occur in the work line 300(W), as shown in FIG. 13(B), the line being used is switched to the protection line 300 (P) to protect the traffic.

The line switching at that time is carried out by transmitting/receiving switching control information called APS byte (K1, K2 byte), which is standardized in the section overhead (SOH) of an SDH/SONET frame, between the individual node apparatuses 100 and 200 through the protection line 300(P).

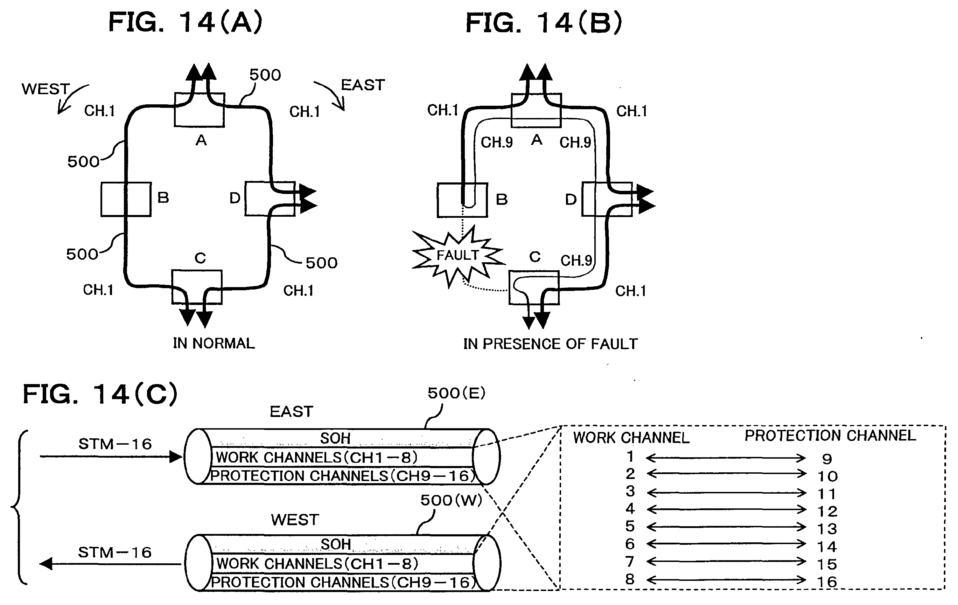

In the meantime, the 2F-BLSR network is composed, as shown in FIGS. 14(A) and 14(C), plural node apparatuses (four node apparatuses designated by A through D in FIG. 14(A) ) connected one to another in a ring-shaped pattern by a pair of physical lines (optical fibers) 500, (for STM-16 (2.4 Gb/s) in FIG. 14(C)) one in each of EAST and WEST directions.

Further, in the 2F-BLSR network, one half of region of the individual optical fiber 500 (E, W) is allocated to work channels and the other half is allocated to protection channels (for example, in STM-16, CH. 1-8 of CH. 1-16 are work channels, and the remaining CH. 9-16 are protection channels) . If a trouble has occurred in the physical line 500 between a pair of particular nodes (the node apparatuses "B"-"C" in FIG. 14(B)), a signal is bridged to the protection channel in the reverse direction to detour around a trouble point, thus relieving the traffic.

In the case of 4F-BLSR network, two sets of work and protection optical fibers ( four in total) are prepared one set for each of EAST and WEST directions instead of dividing the individual optical fiber, thereby switching the lines in units of optical fibers. And in the case of UPSR network, the same signal is rendered to flow in both EAST and WEST directions to make the line redundant. But in either case, line switching, such as bridging is controlled at the node apparatus based on K1, K2 bytes in SOH.

However, the foregoing existing optical fiber communication network would encounter the following problems:

① Since a work line (or a work channel) and a protection line (or a protection channel) equal in capacity to the work line have to be prepared in advance as idle lines (channels), only a poor line occupying efficiency can be achieved.

② if a new node is added to the network, such new node must be located on the existing route (a ring route if the network is a ring-type network) . For locating such new node at any other place off the route, it is necessary to retry the line setting at all because the network construction would be change.

③ However, as things stand, since the line setting is manual setting by the system administrator (operator), load is large and mis-setting would tends to occur.

④ Since line switching can be carried out only based on K1, K2 bytes of SOH standardized by ITU-T, it is impossible to realize flexible line switching with paying consideration to QoS (Quality of Service). Assuming that there exists QoS to be satisfied in the region from the sending end (start point) of a signal to the receiving end (end point), the QoS satisfies between a pair of neighboring nodes. As the signal travels through (the region between) plural nodes, QoS would be occasionally not satisfied at the receiving end. In this case, such switching is not carried out at K1, K2 bytes; originally, line switching should be carried out so as to satisfy QoS though.

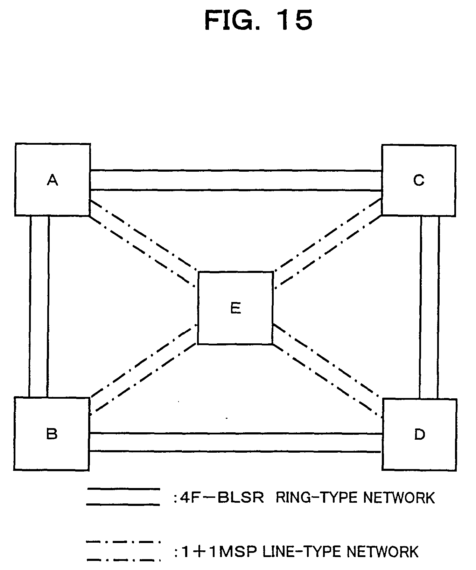

Assuming that the optical fiber communication network is a mesh-type network other than the above-mentioned ring- and line-type networks, a new node can be located (added) in an arbitrary place, but no optimal restoring system for a mesh-type network is standardized intheexistingSDH/SONETsystem. Consequently, the only way to actually construct a mesh-type network using the existing system is to combine the line-type network and the ring-type (4F-BLSR in FIG. 15) as shown in FIG. 15.

However, this hypothetical mesh-type network is a mere composite network of line- and ring-type networks, and therefore the half of the line (channels) must be emptied for protection like the existing ring- or line-type network, which would be poor in line occupancy efficiency. Originally a mesh-type network should be restorable from a trouble without keeping a half of the entire line capacity idle.

Assuming that a line trouble has occurred between nodes "A" and "E" as shown in FIG. 15, it is inevitable to use a protection line between the nodes "A" and "E" because a partial network between "A" and "E" is a line-type network. As an alternative, an idle channel of another route, such as the nodes "A"-"B"-"E" or the nodes "A"-"C"-"E" may be used.

But in the line route such as the nodes "A"-"B"-"E" or the nodes "A"-"C"-"E", though a physical line connection is provided, the restoring operation has to be divided for a line-type switching region and a ring-type switching region (restoring operation is uniform as standardized according to Recommendation) . Practically, therefore, it would be impossible to carry out line switching, either transmitting a signal on the line-type network using a route of the ring-type network or vice versa.

As a consequence, if troubles have occurred one in each of work and protection lines between the nodes "A"-"E", it is impossible to relieve the traffic in despite of a mesh-type structure. This is, with the existing system, it is impossible to construct a high-redundancy (trouble-resistance) network utilizing the original characteristics of a mesh-type network.

SUMMARY OF THE INVENTION

With the foregoing problems in view, one object of the present invention is to provide a network managing method in which setting/managing a line route satisfying a desired QoS (Quality of Service) can be performed independently at the individual node apparatuses, which constitute a network, with ease and flexibleness, drastically improving a redundancy (resistance to hindrance) of the line route irrespective of the current system such as SDH or SONET.

Another object of the invention is to provide a network node apparatus as one of the plural network node apparatuses which constitute the network to be managed by the above-mentioned method.

Still another object of the invention is to provide a mesh-type network to be managed by the above-mentioned method.

To attain the above object (s), according to a generic feature of the present invention, there is provided a network node apparatus for use in a network composed of plural node apparatuses, comprising: a managing section for managing network QoS (Quality of Service) information about quality of service for possible signal transmission routes in a network, the network QoS information being to be obtained as accumulation of inter-neighboring-node QoS information about QoS between neighboring node apparatuses; and a control section for controlling an operation of selecting one of the possible signal transmission routes in said network node apparatus itself based on the network QoS information being managed by the managing section. The network node apparatus will hereinafter be also called "node". The plural nodes are interconnected in a mesh pattern to construct a mesh-type network.

In this network, the network QoS information for the candidate signal transmission routes (hereinafter also called "signal route") in the network is managed at the individual nodes. At the individual node, a route selection by the self node is determined based on the network QoS information being managed by the self node.

Namely, it is possible to select an arbitrary signal route or routes satisfying a desired network QoS information, among candidate signal routes in the network, independently at the individual node.

Therefore it is possible to flexibly control the setting of signal routes according to a desired QoS for the network, realizing a variety of controls according to desired communication services, such as setting of redundancy of an arbitrary signal route or setting of a bi-directional signal route using an arbitrary signal route.

Preferably, the managing section may include the following:

(1) an inter-neighboring-node QoS information arithmetic unit for performing an accumulation arithmetic of both the inter-neighboring-node QoS information between the node apparatus itself and the neighboring node apparatuses and the inter-neighboring-node QoS information being managed by the neighboring node apparatuses and received therefrom.

(2) an inter-neighboring-node QoS information transmitting unit for transmitting to the neighboring node apparatuses the inter-neighboring-node QoS information of the node apparatus itself or the result of the accumulation arithmetic by the inter-neighboring-node QoS information arithmetic unit.

(3) a network QoS information arithmetic unit for obtaining the network QoS information by performing an accumulation arithmetic of the inter-neighboring-node QoS information of the node apparatus itself and the accumulation arithmetic result received from the neighboring node apparatuses.

(4) a network QoS information transmitting unit for transmitting to the neighboring node apparatuses the network QoS information obtained by the network QoS in formation arithmetic unit or the network QoS information received from the neighboring node apparatuses.

Given that each node is provided with these sections, it is possible to transmit the inter-neighboring-node QoS information between the individual nodes while the information is accumulated as the signal travels around the successive nodes on the route.

Therefore, a complicated, enormous setting work, which would have occasionally required setting of information to be managed with respect to the individual nodes takes place, is unnecessary, thus greatly reducing an amount of personal work as by the operator.

As another preferred feature, the managing section may have an ID information adding unit for adding unique ID information, which is assigned to the node apparatus itself, to a signal to be transmitted to the neighboring node apparatus, and a route identifying unit responsive to the signal transmission signal from the neighboring node apparatus to identify the individual signal transmission route in terms of a combination of plural pieces of the ID information sequentially added to the transmission signal. With this arrangement, since the individual node can recognize the signal route from a received signal, it is possible to simply grasp, at the individual node, the number of signal routes in the network up to the self node. It is therefore possible to retrieve candidate signal routes in the network with maximum ease.

As still another preferred feature, the managing section may have a combination information creating/ managing unit for creating/managing combination information about combinations each of the identified signal transmission route and the network QoS information corresponding to the identified signal transmission route. With this arrangement, it is possible to easily retrieve a route satisfying a particular network QoS information, amount all signal routes in the network, thus enabling a variety of route settings.

As a further preferred feature, the managing section may have a route setting unit for selecting, from the signal transmission routes being created/managed by said combination information creating/managing unit in terms of the combination information, an arbitrary signal transmission route, which satisfies a required network quality of service, as a substitute signal transmission route for providing desired communications service, thereby making a setting of signal transmission route in the network.

Further, since information about the combination of the thus grasped route and the network QoS information of the route is created/managed, it is possible to facilitate retrieving/setting a route satisfying a particular network QoS information, among all candidate signal routes in the network. And since a variety of route settings are possible, it is possible to realize setting/managing the route according to desired QoS with maximum ease.

BRIEF DESCRIPTION OF THE DRAWINGS

FIG. 1 is a block diagram schematically showing a mesh-type optical fiber communication network according to one embodiment of the present invention;

FIG. 2 is a diagram showing one example of optical channel container to be used in the digital wrapper transmission system;

FIG. 3 is a block diagram illustrating inter-neighboring-node QoS (Quality of Service) information (q) and network QoS information (Q) in the present embodiment;

FIG. 4 is a block diagram schematically showing a detailed construction of the individual node of FIG. 1;

FIG. 5 is a block diagram schematically showing a detailed construction of a Q/q managing/sending section of FIG. 4;

FIG. 6 is a block diagram illustrating the operation (route quality q collecting/determining operation) of the mesh-type optical fiber communication network of FIG. 1;

FIG. 7 is a block diagram illustrating one example of status in which the route quality q has been determined in the mesh-type optical fiber communication network of FIG. 1;

FIG. 8 is a block diagram illustrating the operation (redundancy setting and line route switching operation) of the mesh-type optical fiber communication network of FIG. 1;

FIG. 9 is a block diagram illustrating one example of status in which the route quality q has been determined in the mesh-type optical fiber communication network of FIG. 1;

FIG. 10 is a block diagram schematically showing the mesh-type optical fiber communication network of FIG. 1 in which a node has been removed;

FIG. 11 is a block diagram schematically showing the mesh-type optical fiber communication network of FIG. 1 in which a node has been added;

FIG. 12 is a block diagram illustrating a modification of the inter-neighboring-node communication;

FIG. 13 (A) is a block diagram schematically showing an existing line-type 1+1 switching network;

FIG. 13(B) is a block diagram illustrating the operation of the network of FIG. 13(A) when a hindrance has occurred;

FIG. 14 (A) is a block diagram schematically showing an existing ring-type network (2F-BLSR);

FIG. 14(B) is a block diagram schematically illustrating the operation of the network of FIG. 14 (A) when a hindrance has occurred;

FIG. 14(C) is a diagram schematically showing how to allocate work channels and protection channels by band division in FIG. 14(A); and

FIG. 15 is a block diagram schematically showing a mesh-type optical communication network constructed by combining the existing line-type 1+1 switching network and the ring-type network.

## DESCRIPTION OF THE PREFERRED EMBODIMENT

One embodiment of the present invention will now be described with reference to the accompanying drawings.

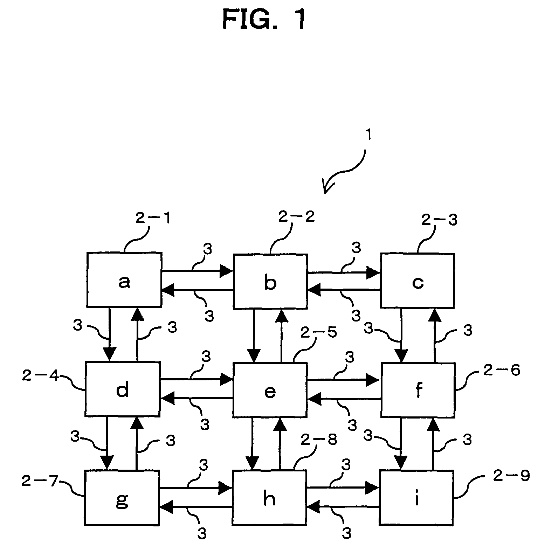

FIG. 1 is a block diagram schematically showing a mesh-type optical fiber communication network 1 according to one embodiment of the present invention. The mesh-type optical fiber communication network 1 is constructed by a plurality of network node apparatuses 2-1 through 2-N (N is an integer equal to or larger than 2, N=9 in FIG. 1) which are bi-directionally communicably interconnected by physical lines 3(hereinafter called "transmission path 3") such as optical fibers. These network node apparatuses 2-1 through 2-N are according to a signal transmission system such as SDH (Synchronous Digital Hierarchy), SONET (Synchronous Optical NETwork) or Digital Wrapper.

Assume that node IDs (identification information, which is represented by a through i for convenience), each unique in the whole globe, such as MAC (Media Access Control) address, are allocated one to each of the nodes 2-i (i=1 to N) . In the following description, the nodes 2-1 through 2-9 are expressed as the nodes a through i, respectively.

Studies on "Digital Wrapper" are on the rise as WDM (Wavelength Division Multiplexing) technology has growingly become popular in recent years. The Digital Wrapper is a rather new signal transmission system in an optical fiber communication network, this technology enables a signal transmission that could not have been realized with the existing transmission systems such as SDH, SONET, STM, ATM and IP.

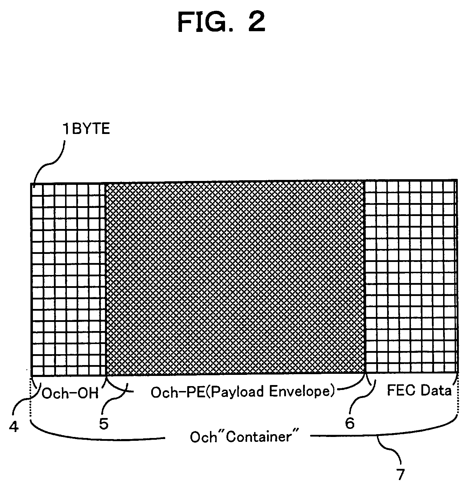

Specifically, the signal frame structure of "Digital Wrapper", which is also called "Optical Channel Container", is generally similar to that of SDH or SONET, as shown in FIG. 2. Namely, a single optical channel container 7 includes an optical channel overhead (Och-OH) section 4, an optical channel payload envelope (Och-PE) section 5, and a forward error correction (FEC) data section 6.

In the Och-OH section 4, information, such as for various kinds of maintenance operation framing bytes (OA1, OA2 bytes) is stored; in the Och-PE section 5, various kinds of signals as of SDH, SONET, ATM or IP are stored; and in the FEC data section 6, data for error correction is stored. Having this frame structure, "Digital Wrapper" realizes a signal transmission that could not have been expected by the existing transmission systems.

In other words, a node suitable for "Digital Wrapper" has a function to send/receive a signal with the above-mentioned frame structure. In the following description, it is assumed that each and every node 2-i is a node suitable for "Digital Wrapper", and that the mesh-type optical fiber communication network (hereinafter also called "mesh-type network" and simply "network") of "Digital Wrapper" is constructed by these nodes 2-i.

In the network 1 of the present embodiment, as line switching factors in the above-mentioned line-type network or ring-type network, "network QoS information (Q)" and "inter-neighboring-node QoS information (q)" are defined in addition to information (e.g., Loss of Signal, Loss of Frame) defined by Standardization Institute, such as ITU-T and Bellcore, and quality information (e.g., B1, B2 bytes). And these two kinds of QoS information are stored in the optical channel container 7 (e.g., in an unused area of the Och-OH section 4, and are transmitted between the individual nodes 2-i so that each node 2-i can independently perform a line route setting (signal routing) operation in accordance with an intended QoS while monitoring QoS, under no central control as by the known NMS (Network Management System) .

The term "network QoS information (Q)" represents information about QoS in a region from a particular start-point node 2-i to end-point node 2-i (e.g., from the node a to the node i in FIG. 1) in the network 1 (i.e., a region from the entrance to the exit in the network 1. The term "inter-neighboring-node QoS information (q)" in the meantime represents information about QoS between neighboring nodes 2-i. The network QoS information (Q) and the inter-neighboring-node QoS information (q) will hereinafter also called "route quality Q" and "route quality q".

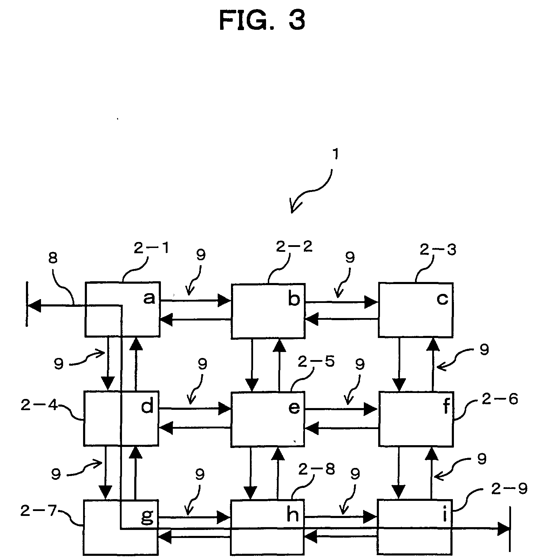

Therefore, for example, as shown in FIG. 3, as attention is paid to the line route 8 via the nodes a, d, g, h, i, among candidate signal transmission routes (line routes) establishable between the node a and the node i, it turns out that the route quality Q of the line routes 8 can simply be obtained by accumulating (addition) the route qualities q of four neighboring-node regions 9, i.e., between the nodes a-d, the nodes d-g, the nodes g-h and the nodes h-i, which jointly constitute the line route 8. Namely, the relation between the route quality Q and the route quality q can be expressed by the following formula (1):

$$Q = \sum_{k=1}^{n} q_k \qquad \cdots \ (1)$$

where n is the number of (inter-neighboring-node) regions via which a signal travels from a starting point to an end point. The route quality $q_k$ can be expressed by the following formula (2).

$$q_k = \sum_{p=1}^{m} a_p b_p \qquad \cdots \ (2)$$

where $b_p$ is the numerical value information relating QoS contained in the route quality $q_k$, m is the number of parameters ($b_p$) relating the route quality q, and $a_p$ is the weighting coefficient with respect to the parameter $b_p$. Assuming that the above-mentioned parameters ($b_p$) are defined as five kinds of parameters (b1 through b5) indicated in the following Table 1, QoS information $q_k$ between a particular pair of neighboring nodes is expressed by the following formula (3).

TABLE 1

| FACTORS OF INTER-NEIGHBORING-NODE QOS INFORMATION (q) | | | |
|---|---|---|---|
| FACTOR | CONTENT | NEEDED DATA LENGTH | EXPRESSION |
| $b_1$ | TRANSMISSION LENGTH | 4 -BIT | ALLOCATE 0000-1111 KM AT 10 KM PITCH |
| $b_2$ | NO. OF NODES TO PASS | 6 -BIT | IN BINARY NOTATION |
| $b_3$ | LINE USE EFFICIENCY | 8 -BIT | IN BINARY NOTATION |
| $b_4$ | QUALITY | 4 -BIT | BER (E.G.) IS QUANTITATED, AND EXPRESSED IN BINARY NOTATION |
| $b_5$ | REDUNDANCY | 2 -BIT | NO. SELECTABLE AS REDUNDANT ROUTE IS EXPRESSED IN BINARY NOTATION |

qk=al*(transmission distance b1)+a2*(number of on-route nodes b2)+a3*(line occupying efficiency b3)+a4*(quality b4)+a5*b5 (redundancy)       (3)

It turns out from the above formula (3) that if the weighting coefficient ($a_p$) with respect to a particular parameter ($b_p$) is large, the value of q is such a value as to treat the parameter ($b_p$) significant.

Namely, for setting a line route short in transmission distance, an increased weighting coefficient al suffices, and for setting a line route less in number of on-route nodes, an increased weighting coefficient a2. Likewise, for setting a line route good in line occupying efficiency, an increased weighting coefficient a3 suffices; for setting a line route good in communication quality, an increased weighting coefficient a4 suffices; and for setting a line route high in redundancy, an increased weighting coefficient a5 suffices.

These individual weighting coefficients (ap) can be manually set, for example, by an operator as described later. Namely, an operator can set a line route satisfying a desired quality of service (condition) (QoS), such as "transmission distance", "number of on-route nodes", "line occupying efficiency", "communication quality" and "redundancy". "line occupying efficiency" may be obtained as an average of values within a predetermined period.

In the present embodiment, assuming that the route qualities Q and q obtained in the above-mentioned manner are stored in unused areas of the Och-OH section 4 in the above-mentioned optical channel container 7, they can be transmitted between the individual nodes 2-i in the network 1.

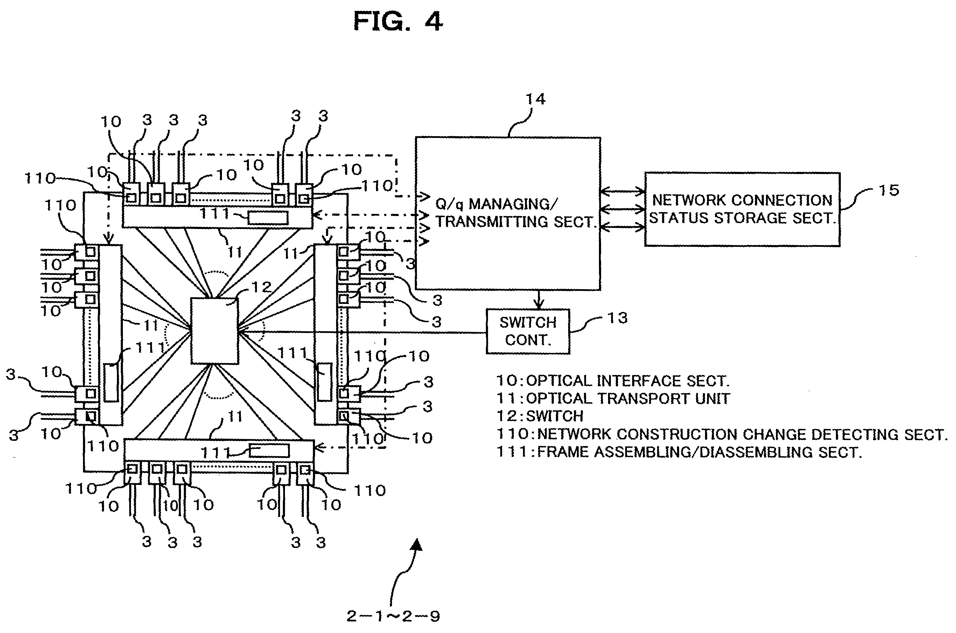

In order to realize the foregoing functions, the individual node 2-i of the present invention, as shown in FIG. 4, is equipped with an optical transport section 11 for every route direction (four route directions here) , and a number of optical interface sections 10 as many as physical lines accommodated in each optical transport section 11. The individual node 2-i is also equipped with a switch 12, a switch controller 13, a Q/q managing/sending section 14, and a network connection status storage section 15.

Each optical interface section 10 accommodates an optical fiber 2 to interface with the optical transport section 11. Further, each optical interface section 10 has a function (network construction change detecting section 110) to detect deletion of a neighboring node 2-i in the network 1, and also to detect addition of a new neighboring node 2-i by receiving a signal from such new neighboring node.

Each optical transport section 11 terminates/ disassembles an input optical signal (optical channel container 7) from the respective self-accommodated optical interface section 10, takes out data, which is stored in the Och-PE section 5, to send the data to the switch 12. Reversely, the data switched over by the switch 12 is stored in the Och-PE section 5 to assemble the optical channel container 7 so that the data is sent to a transmission path 2 via a predetermined optical interface section 10.

For this purpose, each optical transport section 11, as shown in FIG. 4, is equipped with a frame assembling/disassembling section 111 where termination/insertion process of the Och-OH section 4 for an optical signal in each direction and an error correction process using data of an FEC data section 6 are performed.

In the present embodiment, in the frame assembling/disassembling section 111, the route quality Q or the route quality q sent from the Q/q managing/sending section 14 is inserted in an unused area of the Och-OH section 4 at the optical channel container 7, and reversely, the route quality Q or the route quality q inserted in the Och-OH section 4 is extracted and is sent to the Q/q managing/sending section 14.

The switch 12 outputs an optical signal, which is input in an arbitrary direction (optical transport section 11), to an arbitrary direction (optical transport section 11). The switch controller (control section) 13 controls an switching operation (signal routing operation) of the switch 12 in accordance with an instruction (line route setting) based on the information (route quality Q) being managed by the Q/q managing/sending section 14.

The Q/q managing/sending section (managing section) 14 manages/sends the "network QoS information (Q)" about possible all line routes in the network 1 and the "inter-neighboring-node QoS information (q)"between the self node 2-i and a neighboring node 2-i.

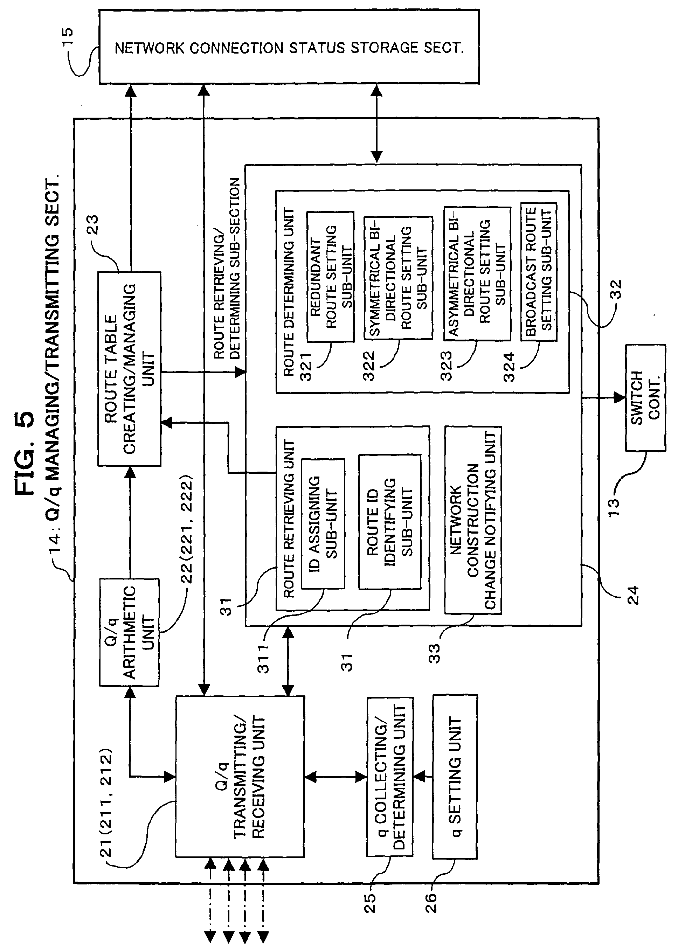

For this purpose, as its main components, as shown in FIG. 5, the Q/q managing/sending section 14 includes a Q/q sending/receiving sub-section 21, a Q/q arithmetic sub-section 22, a route table creating/managing sub-section 23, a route retrieving/determining sub-section 24, q collecting/determining sub-section 25, and a q setting sub-section 26.

The Q/q sending/receiving sub-section 21 transmits the route qualities q of the self node 2-i, which have been collected and determined by the q collecting/ determining sub-section 25, or the result of accumulating arithmetic operation of the route qualities q by the Q/q arithmetic sub-section 22 to all the neighboring nodes 2-i via the frame assembling/disassembling section 111 of the optical transport section 11. Further, the Q/q sending/receiving sub-section 21 transmits the route quality Q, which has been obtained by the Q/q arithmetic sub-section 25, or the route quality Q, which has been received from the neighboring node 2-i, to all the neighboring nodes 2-i via the frame assembling/ disassembling section 111.

Namely, the Q/q sending/receiving sub-section 21 servers not only as an inter-neighboring-node QoS information (q) transmitter 211 but also as a network QoS information (Q) transmitter 212.

The Q/q arithmetic sub-section 22 obtains the route qualities q and the route quality Q by arithmetic operation. Precisely, the route qualities q or Q are obtained by executing the accumulation arithmetic operations of the formulae (1) and (2) by adding the route quality q of the self node 2-i and the route quality q of the neighboring node 2-i received from the neighboring node 2-i, or the result of the accumulation arithmetic operations of the route qualities q at the neighboring nodes 2-i.

Namely the Q/q arithmetic sub-section 22 serves not only as a q (inter-neighboring-node QoS information) arithmetic sub-section 221, which obtains the route quality q by an accumulation arithmetic operation of both the route quality q between the self node 2-i and the neighboring node 2-i and the route quality q sent from the neighboring node 2-i, but also as a Q (network QoS information) arithmetic sub-section 222, which obtains the route quality Q by an accumulation arithmetic operation of both the route quality q of the self node 2-i and the result of the accumulation arithmetic operation of the route qualities q sent from the neighboring node 2-i.

The route table creating/managing sub-section (combination information creating/managing section) 23 creates/manages combination information (route table) about the combination of a line route, which is to be identified by a later-described route retrieving unit 31 in the route retrieving/determining sub-section 24, and Q with respect to the line route. The created "route table" is stored and managed in the network connection status storage section 15. This "route table", as described later, will be recreated at each node 2-i in accordance with a change of network construction due to deletion or addition of a node 2-i.

Further, the route retrieving/determining sub-section 24 retrieves (identifies) a possible line route in the network 1 up to the self node 2-i, and discriminates as to which line route satisfies a desired route quality, whereupon the route retrieving/determining sub-section 24 selects and sets a line route to be used for providing a desired communication service.

For this purpose, the route retrieving/determining sub-section 24 includes the route retrieving unit 31, a route determining unit 32, and a network construction change notifying unit 33. The route retrieving unit 31 has an ID adding sub-unit 311 and a route ID identifying sub-unit 312. The route determining unit has a redundant line route setting sub-unit 321, a symmetrical bi-directional line route setting sub-unit 322, an asymmetrical bi-directional line route setting sub-unit 323, and a broadcast line route setting sub-unit 324.

First of all, in the route retrieving sub-section 31, the ID adding sub-unit (ID information adding sub-unit) 311 sends a node ID, which is allocated to the self node 2-i, to the optical transport section 11 (frame assembling/disassembling section 111) via the Q/q sending/receiving section 21 to add the node ID to a transmission signal between the self node 2-i and the neighboring node 2-i. The ID adding sub-unit 311 adds an identifier (route ID), which is a combination of node IDs, for example, "ab" to a signal having traveled through the node a → the node b, and "abc" to a signal having traveled through the node a → the node b → the node c.

The route ID identifying sub-unit (route identifying unit) 312 identifies a line route, along which a signal, as received, has traveled, by the route ID added to the received signal. If the route ID of the received signal is "ab", the signal is identified as a signal having traveled along a line route through the nodes a and b; otherwise if the route ID of the received signal is "abc", the signal is identified as a signal having traveled along a line route through the nodes a, b and c.

In the meantime, in the route determining unit (route setting unit) 32, the redundancy line route setting sub-unit (redundancy route setting unit) 321 sets (selects) a desired route quality Q, which satisfies an arbitrary line route, among the above-identified candidate line routes being managed by the route table creating/managing sub-section, based on the above-mentioned route table, thereby setting a redundancy of the line route in the network 1.

And the symmetrical bi-directional line route setting sub-unit (symmetrical bi-directional communication setting unit) 322 selects the same line route, among the candidate line routes being managed by the route table creating/managing sub-section 23, as a signal transmission route for bi-directional communication, thereby setting a symmetrical bi-directional line route in the network 1.

Further, the asymmetrical bi-directional line route setting sub-unit (asymmetrical bi-directional communication setting unit) 323 selects upward and downward line routes, which are different from each other, among the candidate line routes being managed by the route table creating/managing sub-section 23, as a line route for bi-directional communication, thereby setting an asymmetrical bi-directional line route in the network 1.

Furthermore, the broadcast line setting sub-unit (broadcast communication setting unit) 324 selects different line routes, among the candidate line routes being managed by the route table creating/managing sub-section 23, as a transmission route of the same signal, thereby performing setting for broadcast communication in the network 1.

Thus in the network 1 (node 2-i) of the present embodiment, settings for various communication services, such as setting of redundancy of a line route, setting of a symmetrical/asymmetrical bi-directional line route and setting for broadcast communication, can simply performed based a common "route table".

Further, the network construction change notifying unit 33 notifies the fact that deletion/addition of a neighboring node 2-i has been detected by the network construction change detecting section 110 associated with one optical interface section 10, to all the neighboring nodes 2-i via all the remaining optical interface section 10, and instructs the route table creating/managing sub-section 23 to update the created "route table" in accordance with deletion/addition of the neighboring nodes 2-i.

Then in FIG. 5, upon receipt of q collecting/ determining triggers from an external source by the operator, the q collecting/determining sub-section 25 automatically collects node information about all confronting (neighboring) optical interface sections 10, which information is possessed by the self node 2-i, and determines a route quality q of the self node 2-i. This node information is stored and managed in the network connection status storage section 15.

This automatic collecting process can be enabled/ disabled by an enable/disable setting. If the automatic collecting process is disabled by the disable setting, the operation can manually set by the q setting sub-section 26.

In this event, the operator can set an arbitrary weighting coefficient ap as an arbitrary value by instructing the q setting sub-section 26 to set/update the value of the weighting coefficient ap with respect to the parameter bp in the formula (2), and thereby can set the route quality q with an arbitrary parameter bp treated as significant, among the parameters bp relating the above-mentioned q, as a route quality q of the self node 2-i.

The operation of the thus constructed network 1 (nodes 2-i) of the present embodiment will now be described in detail.

(1) Collection/Determination of Route Quality q:

The algorithm of collecting/determining the route quality q at the individual node 2-i of FIG. 1 will now be described.

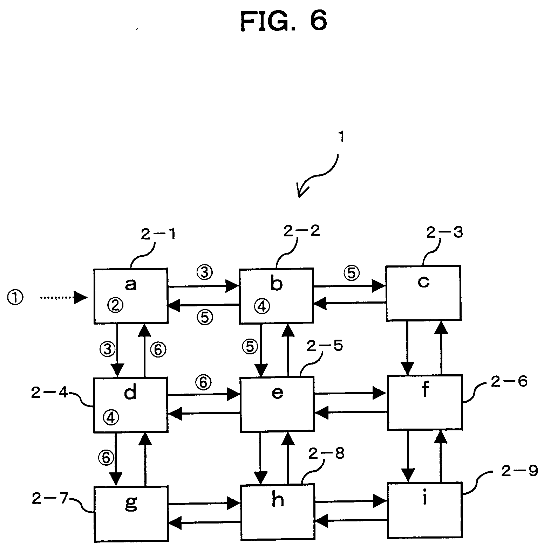

As shown in FIG. 6, firstly the operator gives, for example, the node 2-1 (node a) a q determining trigger (① in FIG. 6). At the node a, the q collecting/ determining sub-section 25 of the Q/q managing/sending section 14 collects necessary self-node information (parameters, such as distance to the neighboring node 2-i of each optical interface section 10, line occupying efficiency, quality, self-node redundancy) needed to determine a route quality q and determines (generates) of the individual optical interface section 10 (hereinafter also called "interface 10") (② in FIG. 6). The determined route quality q is stored and managed in the network connection status storage section 15 (hereinafter also called "storage section 15").

Then the node a transfers the route quality q of the individual interface 10 of the determined self-node side from the Q/q sending/receiving section 21 (q transmitting unit 211) to the frame assembling/ disassembling section 111 to store the last-named route quality q into an unused area of the Och-OH section 4 at the optical channel container 7 (hereinafter also called "signal frame 7) and to transmit (notify) to the neighboring nodes 2-2, 2-4 (node b, node d) ) (③ in FIG. 6).

At each of the nodes b and d, to which the route quality q of the node a has thus been transmitted, like the node a, the q collecting/determining sub-section 25 of the Q/q managing/sending section 14 respectively collects information (self-node information) needed to determine the route quality q on the self-node (b, d) side and determines the route quality q of the individual interface 10 on the self-node side (④ in FIG. 6). The reason why the route quality q is thus transmitted between the neighboring nodes 2-i, the parameters (such as line occupying efficiency, redundancy) to be interpolated/ determined by the relation with q on the neighboring node side exists in the self-node information.

The node b, like the node a, notifies each of the neighboring nodes a, c, e of the route quality q of the individual interface 10 on the determined self-node side at the Och-OH section 4 of the signal frame 7 (⑤ in FIG. 6). Likewise the node d notifies each of the neighboring nodes a, e, g, of the route quality q of the individual interface 10 on the determined self-node side at the Och-OH section 4 of the signal frame 7 (⑥ in FIG. 6).

As the foregoing processes are automatically repeated at the individual node 2-i, the route quality q of the individual interface 10 of the self node is decided for each and every node 2-i in the network 1 so that every node 2-i can manage the route quality q of the individual interface of the self node.

Thus, since the individual node 2-i collects various kinds of information needed to generate a route quality q, it is possible to reduce the number of processing steps needed to manage (control) personal setting errors, which tend to occur in a large-sized mesh-type network, and to monitor/control the network in real time based on the route quality Q/q.

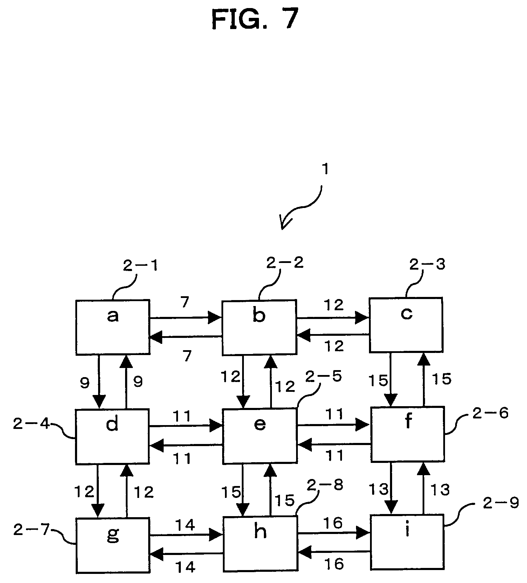

FIG. 7 schematically shows one example of network whose route quality q has been defined. In FIG. 7, for example, the route quality q between the node a and the node b is represented by "7" for either upward route or downward route, and the route quality q between the node a and the node d is represented by "9" for either upward route or downward route. Likewise, the route qualities q decided between neighboring nodes 2-i are respectively represented by numeral values.

In this case, for example, the route quality Q for a signal route (line route) along which a signal travels through the node a → the node b → the node c → the node f → the node i will be obtained Q=7+12+15+13=47 as the successive nodes 2-i on the signal route sequentially adds (accumulates) the route quality q of each and every self-node side to the route quality q of the neighboring node side (2-i). This value Q is transmitted finally to the node i (end point).

If automatic sending of the route quality Q/q (sending of Q will be described later) is set to be disable, the operator can arbitrarily set a part or all of the parameters for the route quality q.

Namely, by arbitrarily setting the parameters of the route quality q, which parameters serve as identifiers to monitor/control the network 1, by the q setting sub-section 26, it is possible to intentionally change the route quality q in such a manner that a particular signal route is used in precedence (or by force), or reversely in such a manner that a particular signal route is difficult to use (or unable to use).

For example, if the operator sets the redundancy (parameter b5 in Table 1) between the self-node and a particular neighboring node 2-i irrespective of an actual situation to increase the route quality q, it is possible to render the node 2-i to execute a route selecting operation in which "redundancy" is treated as significant. In this event, the parameters except b5 are values reflecting the status of the network 1, which values are reflected also on the route selecting operation.

(2) How to Identify Signal Route and How to Set Line Route:

In order to manage the route quality Q in the network 1 for every candidate signal route by the route table creating/managing sub-section 23, the individual node 2-i creates a correlation of the signal route and the route quality Q as "route table". For this purpose, it is essential to retrieve/identify the signal routes in the network 1.

In the present embodiment, retrieving/identifying a signal route automatically takes place as a signal route (line route) retrieving command (such as "from NE, to NE") are given to the network 1. "NE" stands for "Network Element" meaning a node 2-i.

For example, for retrieving and identifying candidate signal routes between the node a and the node i, firstly the operator inputs a retrieving command "from NE:a, to NE:i" to an arbitrary node 2-i in the network 1. The last-named node 2-i having received this retrieving command notifies (transfers to) the node a, which is "from NE", that the input of the retrieving command has been received. If the operator gives this retrieving command directly to the node a, transfer of the retrieving command is not executed.

Then, the node a issues a signal from all the interfaces 10 possessed by the self node. At that time, the ID adding sub-unit of the route retrieving unit 31 adds the node ID of the self node a to each of the issued signals. Then the nodes b and d having received the above-mentioned issued signal add the node IDs of the respective self nodes to the received signal by the ID adding sub-unit 311 and, likewise, issue the resultant signal from every interface 10 to the corresponding neighboring node 2-i.

As the foregoing process are performed by all the nodes 2-i existing in the network 1, signals (result of route retrieving) having the following combinations of node Ids finally arrive at the node i, which is "to NE", and are respectively identified by the route ID identifying sub-unit 312.

"abcfi", "abcfedghi", "abefi", "abedghi", "abehi", "adefi", "adebcfi", "abehi", "adghebcfi", "adghefi", "adghi".

As the result, the node i recognizes the result of the retrieving command "from NE:a, to NE:i), namely, that all candidate signal routes from the node a to the node i in the network 1 are 11 routes as mentioned above. Thereby in the node i, it is possible to easily detect an undesirable-connection between the nodes 2-i and a node 2-i at which traffic tends to concentrate (e.g., if many route IDs contain the same ID).

Then, at the node i, the route table creating/managing section 23 creates, from accumulated information (route quality Q) about q decided at the individual node 2-i as described above in connection with FIG. 7, "route table" showing a correlation of the above-identified 11 routes (route identifiers) and the corresponding route qualities Q as shown in the following Table 2.

TABLE 2

| TABLE OF ROUTES (NODES a → i ) | |
|---|---|
| ROUTE ID | ROUTE QUALITY Q |
| [abcfi] | 47 |
| [abcfedghi] | 98 |
| [abefi] | 43 |
| [abedghi] | 72 |
| [abehi] | 50 |
| [adefi] | 44 |
| [adebcfi] | 72 |
| [adehi] | 51 |
| [adghebcfi] | 102 |
| [adghefi] | 74 |
| [adghi] | 51 |

As the result, the node i can easily retrieve a target line route (optimal line route to be set in accordance with Q) in the network 1 based on the "route table". Assuming that the above-mentioned route quality q has been determined with the weighting coefficient al with respect the parameter b1 (distance to the neighboring node 2-i) being increased and the weighting coefficients a2 through a5 with respect to the remaining parameters b2 through b5 being default values (e.g., a1=4, a2=1, a3=1, a4=1, a5=1), it turns out from the above Table 2 that the route whose signal transmission distance is shortest in the network 1 is a signal route in which route identifier="abefi" and route quality Q=43.

The thus obtained "route table" (route quality Q for every line route) is transmitted from the node i to all the neighboring nodes 2-i and is then transmitted to all the nodes 2-i in the network 1 as if toppling over like a row of dominos in the same manner as the above-mentioned transmission of the route quality q, and finally the same "route table" at all the nodes 2-i is stored/managed in the storage section 15.

Then, as the switching operation of the switch 12 is controlled by the switch controller 13 in such a way that the nodes a, b, c, f and i assumes a status in which a signal route with the route identifier="abefi" and Q=43 is selected as that for providing a desired communication service, a line route in which the transmission distance of the node a → the node b → the node c → the node f → the node i is a shortest is set in the network 1.

Also the "route table" with respect the signal route in the direction opposite to the above-mentioned signal route, e.g. the signal route in the direction of the node the node i → the node a, is created as the route quality q determining process and the route identifying process, which is responsive to the retrieving command (e.g., "from NE:i, to NE:a") in the same manner as described above. And at the individual node 2-i, the identical information (route table, the route quality Q for every candidate signal route between the node i → the node a) is retained/managed in the storage section 15.

As mentioned above, according to the present invention, partly since the route quality Q for candidate line routes in the network 1, which quality is obtained as accumulated information of the route qualities q between the neighboring nodes 2-i, is managed in every node 2-i in the network 1, and partly since the individual node 2-i determines a line route setting operation on the self-node side based on the route quality Q ("route table") being managed by the self node, it is possible to set/manage a line route in accordance with a desired QoS independently at each of the nodes 2-i, which constitute the network 1, with ease and flexibleness.

Therefore, it is possible to control the setting of a line route in accordance with a desired QoS flexibly without any restriction by the existing system such as SDH or SONET, thus realizing a variety of controls in accordance with intended communication services. For example, as described later in detail, it is possible to drastically improve redundancy (resistance to hindrance) of an arbitrary line route in the network 1 by the line route redundancy setting based on the route quality Q to thereby realizing a greatly increased degree of reliability of the entire network 1. It is also possible to set a symmetrical or asymmetrical bi-directional line routes or a broadcast line route in accordance with a desired QoS in the network 1 in a very simple manner.

Particularly in the present embodiment, partly since the above-mentioned route quality Q is obtained by transmitting the route qualities q between the individual nodes 2-i while accumulating the route qualities q, and partly since the obtained route quality Q is transmitted between the individual nodes 2-i as information (information for "route table") to be managed at the individualnode2-i, a complicated, enormous setting work, which would have occasionally required in a mesh-type network 1 where setting of information to be managed with respect to the individual node 2-i takes place, is unnecessary, thus greatly reducing an amount of personal work as by the operator.

In addition, since at the individual node 2-i, information needed to determine the route quality q can be automatically collected/determined by the q collecting/determining sub-section 25, it is possible to reduce personal work, such as setting of necessary information. This automatic collecting process can be enabled/disabled by an enable/disable setting. If the automatic collecting process is disabled by the disable setting, the operation can manually set by the q setting sub-section 26. Thus, it enables to set an optimal line route (a target line) flexibly.

Further, in the present embodiment, partly a unique node ID is allocated to each node 2-i in the network 1, and partly since at the sender-side node 2-i the node ID allocated to the self node 2-i is added to a signal sent to the neighboring node 2-i by the ID adding sub-unit 311 (FIG. 5), it is possible to identify, at the receiver-side node 2-i, the transmission route of the signal in terms of the combination of the node IDs (route ID) added to the received signal from the neighboring node 2-i, thus identifying candidate line routes in the network 1. It is therefore possible to realize not only a candidate line route retrieving process in the mesh-type network 1 with maximum ease, but also creating/managing of "route table" by the route table creating/managing sub-section 23 in a very simple manner.

(3) Redundancy-Setting Line Route:

How to redundancy-set a line route will now be described.

Assume that a protection line route is set for a signal route in which the above-mentioned route identifier="abefi" and the route quality Q=43. In this case, firstly at the individual 2-i, the redundant line route setting sub-unit 321 of the route determining unit 32 sorts the above-mentioned Table 2 according to the smallness of the route quality Q as indicated in the following Table 3.

TABLE 3

| TABLE OF ROUTES (NODES a → i) | | |
|---|---|---|
| PRECEDENCE | ROUTE ID | ROUTE QUALITY Q |
| 1. | [abefi] | 43 |
| 2. | [adefi] | 44 |
| 3. | [abcfi] | 47 |
| 4. | [abehi] | 50 |
| 5. | [adehi] | 51 |
| 5. | [adghi] | 51 |
| 6. | [abedghi] | 72 |
| 6. | [adebcfi] | 72 |
| 7. | [adghefi] | 74 |
| 8. | [abcfedghi] | 98 |
| 9. | [adghebcfi] | 102 |

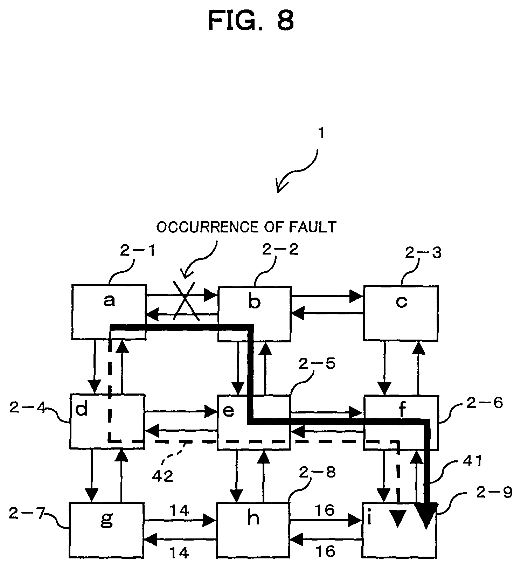

From this Table 3, it can be judged that an optimal redundant line route for the target (shortest transmission distance) line route (route quality Q=43) is a second-shortest-transmission-distance line route (route quality Q=44, route identifier="adefi"). Therefore, as shown in FIG. 8, if this signal route (route quality Q=44, route identifier="adefi") is previously set as a protection line route (detour route) 42 for the line route (original route) 41 (route quality Q=43, route identifier="abefi") by the redundant line route setting sub-unit 321, it is possible to make an instant changeover (detour) to the optimal (short transmission distance) detour route 42 when a trouble has occurred (between the nodes a and b in FIG. 8) in the original route 41.

Assuming that a trouble has actually occurred between a particular pair of nodes 2-i, the occurrence of the trouble is detected at the neighboring nodes 2-i of the section where the trouble has occurred (e.g., the individual nodes a and b if the trouble has occurred in the section between the nodes a and b) , and the occurrence of the trouble is then notified to all the nodes 2-i in the network as if toppling over like a row of dominos in the same manner.

Then at the node 2-i having been notified of the occurrence of the trouble, the route determining unit 32 automatically selects an detour route 42 having the optimal route quality Q, among candidate routes going round about the section where the trouble has occurred (in this case, the line route whose route ID does not contain "ab"), based on the above-mentioned "route table" being managed by the self node. Based on this selection, the switch controller 13 controls the switching operation of the switch 12 to change the line route (reselection or rerouting of the line route) to a detour route.

Namely, at the individual node 2-i on the original route 41, the use of the original route 41 is stopped, while at the individual node 2-i on the detour route 42, the detour route 42 is validated by a setting such as to transmit the received signal to the interface 10 connected to the neighboring node 2-i on the detour route 42. As the result, the detour tour 42 becomes conductive as a substitution for the original route 41, finalizing the line route switching.

Thus in the present embodiment, since a redundancy of a line route in the network is set by selecting an arbitrary line route, which satisfying a desired QoS, among candidate line routes being identified/managed according to the "route table", as a protection route of the arbitrary line route, it is possible to repeatedly set a redundancy route in the network 1, thus remarkably improving the reliability of the network 1.

Since all the nodes 2-i in the network 1 retain/manage the same "route table" as mentioned above, no contradiction would occur in route change between the nodes 2-i. At that time, at the node 2-i on the detour route, it is possible to confirm, by the route ID identifying sub-unit 312 from the route ID attached to the received signal, whether the signal is received exactly from the detour route. Otherwise if the route ID of the received signal has been changed, the node 2-i can recognize that a change has occurred in the line route due to the occurrence of a trouble on the line route along which the received signal travels.

Alternatively, the occurrence of the trouble may be detected by a non-illustrated network managing apparatus, such as NMS (Network Management System), and the section where the occurrence of the trouble may be notified to the individual nodes from the network managing apparatus.

(4) Setting of Bi-directional Line Route:

How to set a bi-directional line route in the network 1 will now be described.

Assume that a bi-directional (two-way) line route is set between the nodes a and i. In this case, firstly the operator inputs a command, which means "set a bi-directional (two-way) line route between the nodes a and i", to the node 2-i in the network 1. As this command is finally received by the node a, not only the route in the direction of the node a (start point of the signal) → the node i as mentioned above in the item (2), but also the route in the reverse direction (of the node i → the node a) starting from the node i, like the route of the of the node a → the node i is retrieved.

Accordingly, at the node i, it is possible to create the "route table" for the direction of the node a → the node i, while at the node a, it is possible to create the "route table" for the reverse direction. As these "route tables" are transmitted respectively at the individual nodes 2-i , a bi-directional "route table" between the nodes a and i is retained and managed by every node 2-i in the network 1.

Therefore, if at the individual node 2-i, the route determining unit 32 selects a line route, which has an optimal target route quality Q, as a line route to be used, a bi-directional line route (communication line) having the optimal target route quality Q is automatically set independently in each direction (between the nodes a and i) in the network 1.

Assuming that, as shown in FIG. 7, the route qualities q between the individual nodes 2-i have the same value for the two directions, the route qualities Q of all the line route also have the same value for the two directions. Therefore, as the line route having an optimal target route quality Q is selected, the same line route is selected as a bi-directional communication line.

In the case of FIG. 7, for example, partly since the "route table" for the direction of the node a → the node i is shown in the above Table 3, and partly since the "route table" for the direction of the node i → the node a is shown in the following Table 4, it is possible to set the line route having the route quality Q=43 and the route ID="abefi" and the line route having the route quality Q=43 and the route ID="ifeba" as a shortest target bi-directional communication line.

TABLE 4

| TABLE OF ROUTES (NODES i → a ) | | |
|---|---|---|
| PRECEDENCE | ROUTE ID | ROUTE QUALITY Q |
| 1. | [ifeba] | 43 |
| 2. | [ifeda] | 45 |
| 3. | [ifcba] | 47 |
| 4. | [ihega] | 50 |
| 5. | [ihgda] | 51 |
| 6. | [iheda] | 52 |
| 7. | [ifcbeda] | 70 |
| 8. | [ihgdeba] | 72 |
| 9. | [ifehgda] | 75 |
| 10. | [ifcbehgda] | 100 |
| 11. | [ihgdefcba] | 103 |

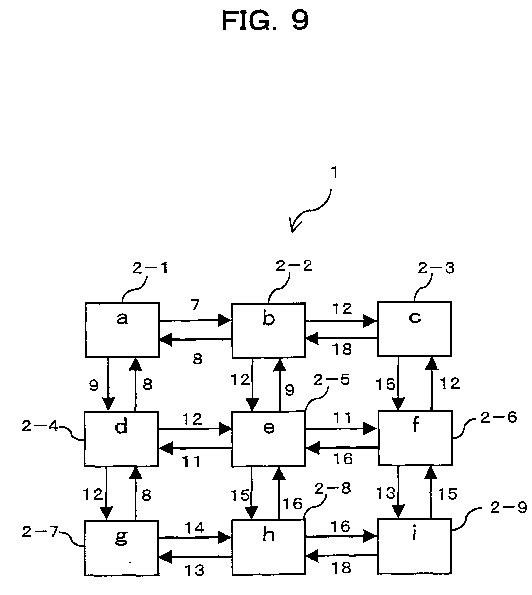

Otherwise, as shown in FIG. 9, if a section in which the route quality q for the interface 10 between the neighboring nodes 2-i has different values between the upward and downward routes of a bi-directional line route, the same value should by no means be selected (set) for both the direction of the node a → the node i and the direction of the node i → the node a as a bi-directional communication line.

Namely, in the case of FIG. 9, partly since the "route table" for the direction of the node a → the node i is shown in the following Table 5, and partly since the "route table" for the direction of the node i → the node a is shown in the following Table 6, the optimal (shortest) target line route for the direction of the node a → the node i is a line route having the route quality Q=43 and the route ID="abefi" as shown in Table 5. And the optimal target line route for the reverse direction is a line route having the route quality Q=47 and the route ID="ihgda" as shown in Table 6. Thus asymmetrical line routes are set as a bi-directional communication line.

TABLE 5

| TABLE OF ROUTES (NODES a → i ) | | |
|---|---|---|
| PRECEDENCE | ROUTE ID | ROUTE QUALITY Q |
| 1. | [abefi] | 43 |
| 2. | [adefi] | 45 |
| 3. | [abcfi] | 47 |
| 4. | [abehi] | 50 |
| 5. | [adghi] | 51 |
| 5. | [adehi] | 52 |
| 6. | [adebcfi] | 71 |
| 6. | [adedghi] | 72 |
| 7. | [adghefi] | 75 |
| 8. | [adghebcfi] | 100 |
| 9. | [abcfedghi] | 103 |

TABLE 6

| TABLE OF ROUTES (NODES i → a ) | | |
|---|---|---|
| PRECEDENCE | ROUTE ID | ROUTE QUALITY Q |
| 1. | [ihgda] | 47 |
| 2. | [ifeba] | 48 |
| 3. | [ifeda] | 50 |
| 4. | [iheba] | 51 |
| 5. | [ifcba] | 53 |
| 5. | [iheda] | 53 |
| 6. | [ihgdeba] | 68 |
| 7. | [ifehgda] | 75 |
| 8. | [ifcbeda] | 76 |
| 9. | [ihgdefcba] | 100 |
| 10. | [ifcbehgda] | 101 |

In other words, by comparing the two "route tables" for the bi-directional line route, it is possible to discriminate that or not the route qualities q between all the neighboring nodes 2-i are available. Namely, if the route qualities Q for total eleven line routes have the same value for the bi-directional communication line, it is possible to judge that the route qualities q between all the neighboring nodes 2-i in the network 1 are symmetrical for the bi-directional communication line. Therefore, in this case, line routes traveling quite the same route having the optimal route quality Q between the nodes a and i are set (selected) as a bi-directional communication line so that a "symmetrical" bi-directional communication line is set (between the nodes a and i) in the network 1.

Otherwise if the result of comparison of the route qualities Q are different for the upward and downward routes as shown in Tables 6 and 7, it is possible to judge that the route qualities q between the neighboring nodes 2-i for the upward and downward routes are asymmetrical. Therefore, in this case, two line routes having different optimal route qualities Q are respectively set (selected) for the upward and downward routes so that an "asymmetrical" bi-directional communication line is set (between the nodes a and i) in the network 1.

In the network 1, if such "asymmetrical" two-way route is set, it is possible to disperse the load of traffic in the network 1 with a risk that line management might be complicated. To this end, it is preferable that a symmetrical two-way route can be set (by force) also when the route qualities q between the neighboring nodes 2-i are asymmetrical for the upward and downward routes.

Consequently, in the present embodiment, the route table creating/managing sub-section 23 obtains the sum of the route qualities Q of the upward and downward directions for the same line route (i.e., Q1+Q2 where Q1 is the route quality Q for the direction of the node a → the node i, and Q2 is the route quality Q for the reverse direction (direction of the node i → the node a)), whereupon a symmetrical two-way route having the optimal target route quality Q1+Q2 is set based on the obtained sum of the two route qualities Q.

Namely, if the route qualities q between the neighboring nodes 2-i are as shown in FIG. 9, the individual node 2-i creates a "route table (2-way route)" of the following Table 7 based on the above Tables 5 and 6. As the result, it is possible to judge that the two line routes having the same route quality Q1+Q2=91 and the route ID="abefi", "ifeba" are the optimal line routes as a symmetrical two-way line so that a bi-directional communication line is set between the nodes a and i.

TABLE 7

| TABLE OF ROUTES (2-WAY ROUTE) | | | | | |
|---|---|---|---|---|---|
| ROUTE ID (a → i ) | Q1 | ROUTE ID (i → a) | Q2 | Q1+Q2 | PRECEDENCE |
| [abefi] | 43 | [ifeba] | 48 | 91 | 1 |
| [adefi] | 45 | [ifeda] | 50 | 95 | 2 |
| [abcfi] | 47 | [ifcba] | 53 | 100 | 3 |
| [abehi] | 50 | [iheba] | 51 | 101 | 4 |
| [adghi] | 51 | [ihgda] | 47 | 101 | 4 |
| [adehi] | 52 | [iheda] | 53 | 105 | 5 |
| [adebcfi] | 71 | [ifcbeda] | 76 | 147 | 7 |
| [adedghi] | 72 | [ihgdeba] | 68 | 140 | 6 |
| [adghefi] | 75 | [ifehgda] | 75 | 150 | 8 |
| [adghebcfi] | 100 | [ifcbehgda] | 101 | 201 | 9 |
| [abcfedghi] | 103 | [ihgdefcba] | 100 | 203 | 10 |

As mentioned above, in the present embodiment, at the individual node 2-i, by a simple control such as to select different line routes or identical line routes satisfying target route quality Q, among the line routes being identified/managed according to the "route table", as line routes for bi-directional communication, it is possible to set either an asymmetrical or symmetrical 2-way route suitable for a desired route quality Q in the network 1 in a very simple, flexible manner.

(5) Setting of Broadcast Line:

How to set a broadcast line in the network 1 will now be described.

With a line route having the route quality Q=43 and route ID="abefi" being set in the network 1 as the shortest target route, it is assumed that a broadcast communication line for sending a signal, which is to be transmitted on this line route, between the nodes g and h is set.

It is assumed that, likewise the creation of the "route table" for the direction of the node a → the node i, the "route table" for all the routes (e.g., a route starting at the node a) in the network 1 and has already been retained/managed by all the nodes 2-i.

In this situation, first of all, the operator inputs a command, which means "send the content of the line route flowing the node a → the node i also to the node h and g for the target shortest route" (broadcast setting command, e.g., "a → i, h, g"), to an arbitrary node 2-i (e.g., the node a) in the network 1.

When the above-mentioned command is received at the node a, the broadcast line route setting sub-unit 324 of the route determining unit 32 consults the individual "route tables" for the direction of the node a → the node h and the direction of the node a → the node g, and selects/determines optimal routes (shortest routes in this case) for the direction of the node a → the node h and the direction of the node a → the node g as the target shortest routes for direction of the node a → the node i. Then the switch controller 13 sets the switching operation of the switch 12 based on the selection/determination of the broadcast line route setting sub-unit 324.

The node a thereby can send the content of the line route for the direction of the node a → the node i also to the optimal route for both the direction of the node a → the node h and the direction of the node a → the node g.

And the broadcast setting command is sequentially sent to the next neighboring nodes (nodes to be set) 2-i on the selected/determined line route so that the same broadcast setting is performed also at the nodes 2-i to be set.

As the result, for the target shortest route in the direction of the node a → the node i, the optimal (shortest) broadcast setting for the direction of the node a → the node g and the direction of the node a → the node h is completed.

Thus in the present embodiment, at each node 2-i, it is possible to perform a broadcast communication setting suitable for a desired route quality Q in the network 1 by a simple control, i.e., selecting different line routes satisfying the target route quality Q, among the line routes being identified/managed according to the "route table", as transmission route of the same signal.

(6) Operations to Cope with Network Construction Changes:

How to cope with a network construction change due to deletion of a particular node 2-i or addition of a new node 2-i will now be described.

(6-1) If a node 2-i is deleted in the network 1:

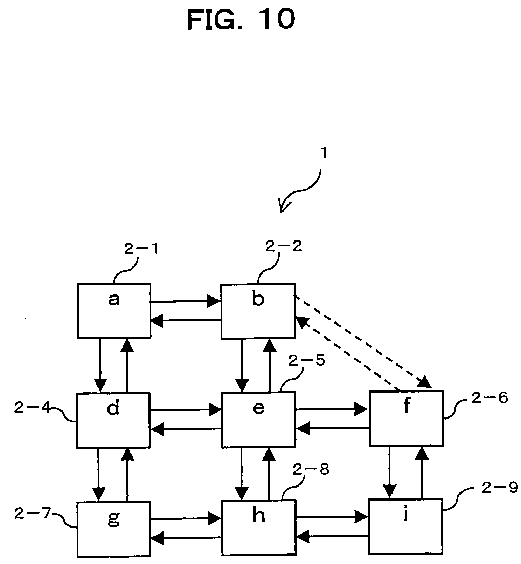

An example, as shown in FIG. 10, in which a node c is deleted is considered. In this example, the nodes b and f being connected to the node c to be deleted is notified of the deletion as by inputting a command by the operator. Upon receipt of the command, at the individual node b, f, the network construction change detecting unit 110 of the interface 10 connected to the node c can detect that "neighboring node has been deleted".

In response to this, the node b notifies the nodes a, e of the above-mentioned deletion by the network construction change notifying unit 33, and likewise the node f notifies the nodes e, i of the same deletion. As the individual node 2-i repeats this notifying process, all of the individual nodes 2-i, in the network 1 recognize of the deletion of the node c.

Then, all the individual nodes 2-i, except the node c having been deleted as recognized, delete the line route in which the node c exists, in the "route table" possessed by the self node 2-i (the line route whose route ID contains node ID=c of the node c), and "route table" is recreated based on the value of the route quality Q. Upon completion of the recreation of the foregoing "route tables" at all the individual nodes 2-i , the node c is actually removed off the network 1.

Also if any of the individual nodes 2-i except the node c is deleted, the "route table" according to the deletion of such node is recreated, in the same manner as mentioned above in connection with the node c, before that node is actually deleted. Further, if two or more nodes 2-i are deleted, the line routes containing the respective node IDs are deleted.

As mentioned above, if a node is deleted in the network, individual complicated setting works, which would have occasionally required in a mesh-type network 1, are unnecessary, facilitating the management of line routes in the network 1. It is possible to cope with deletion of a node without recreating the "route table" entirely.

If connection with another node 2-i in the network 1 is performed using the interface 10 to be emptied after deletion of a node (e.g., if the nodes b and f are connected as indicated by dotted lines in FIG. 10), it is necessary to recreate the "route table" entirely after the route quality q/Q determination and the route retrieving before the node deletion, because a new line route occurs.

(6-2) If a new node 2-i is added in the network 1:

Reversely, how to cope with addition of a new node 2-i in the network 1 will now be described.

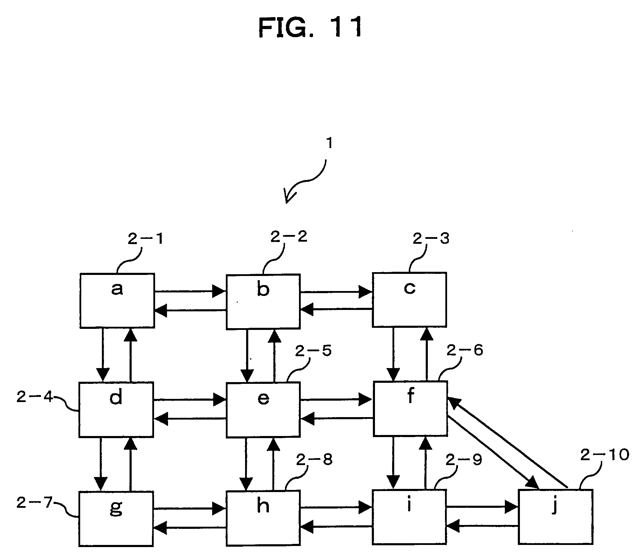

It is assumed that a node j (node 2-10) having the node ID=j has been added as a new node as shown in FIG. 11. In this case, at each of the nodes i and f to which the new node j has been connected, the network construction change detecting section 110 of the interface 10 detects that the nodej has been added. In response to this, the node i notifies every neighboring node 2-i (nodes h and f) of "addition of node" via the interface 10 by the network construction change notifying unit 33. Likewise the node f notifies every neighboring node 2-i (nodes e and i) of "addition of node".

As this notifying process is repeated, every node 2-i in the network 1 recognizes the addition of the node j . All the nodes 2-i that have thus recognized of addition of the node j then assume a stand-by status to add information (line route running through the node j, and the route quality Q) of the node j to the "route table" possessed by the self node 2-i.

In this situation, as the above-mentioned route quality Q determining process and the route retrieving process are executed, the "route table" for which the line route passing through the node j is considered is created, and is retained/managed at every node 2-i in the network 1. In this manner, even if a node is added in the network 1, individual complicated setting works, which would have occasionally required in a mesh-type network 1, are unnecessary, facilitating the management of line routes in the network 1.

As mentioned above, in the present embodiment, since the network construction change due to the node deletion or the node addition can be simply coped with by reconstructing the "route table" at each node 2-i, it is possible to reconstruct the network 1 simply and freely. It is therefore also possible to add or delete a node 2-i according to the increase and decrease of capacity of the network 1.

(7) Modification in Transmission of Route Quality Q ("Route Table"):

In the previous example, an unused area of the Och-OH section 4 in the optical channel container 7 is utilized in transmitting the route quality Q ("route table") between the nodes 2-i to cope with a transmission system called "Digital Wrapper". Alternatively, if the mesh-type network 1 is constructed as the existing network such as SDH or SONET, an unused overhead area in SDH or SONET transmission frame may be utilized to cope with such network 1 with the same result.

In other words, by utilizing an unused overhead area in Digital Wrapper, SONET or SDH, it is possible to realize a network management that flexibly controls a variety of communication services, with keeping connectivity (compatibility) with the existing apparatus and network, namely, without depending on the difference in transmission system such as SDH or SONET.

As represented by OSC (Optical Supervisory Channel) in WDM transmission, a sub-channel is occasionally used for inter-node communication in the network 1. In such case, this sub-channel also can be utilized in transmission of the route quality Q ("route table") in addition to an unused overhead area in the above-mentioned optical channel container 7 or SDH/SONET transmission frame.

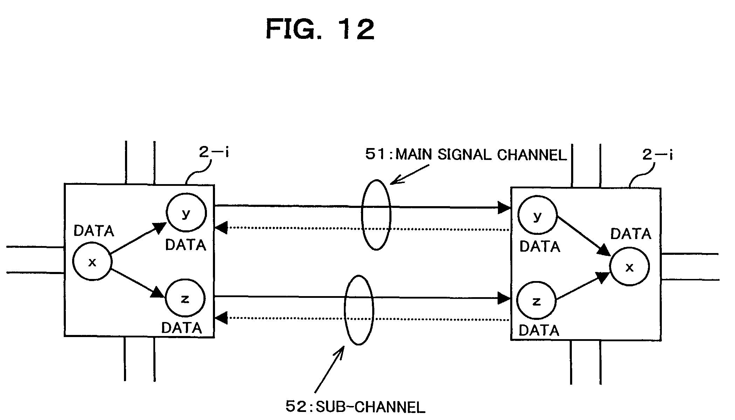

Namely, as schematically shown in FIG. 12, if a primary signal channel 51 and a sub-channel 52 are used in inter-node communication, data X (route quality Q) is divided into data x and data y at the sender-side node 2-i; one data x is transmitted by means of an unused overhead area of a signal to be transmitted on the main signal channel 51, and the other data y is transmitted by means of the sub-channel 52. And the receiver-side node 2-i, operates based on both the data x to be received through the main signal channel 41 and the data y to be received through the sub-channel 52.

Since communication traffic for transmitting the route quality Q between the nodes is thereby dispersed, it is possible to reduce the heaviness with respect to the original communication traffic.

The present invention should by no means be limited to the illustrated embodiment, and various changes or modifications may be suggested without departing from the gist of the invention.

## Claims

1. A method of managing a network (1) composed of a plurality of network node apparatuses (2-1 through 2-N) (N is an integer more than 1), **characterized in that** said method comprises the steps of:
   at each network node apparatus (2-i) (i=1, 2, 3 ... N)

   (a) managing network QoS (Quality of Service) information (Q) about quality of service for possible signal transmission routes in the network (1), said network QoS information (Q) being to be obtained as accumulation of inter-neighboring-node QoS information (q) about QoS between neighboring node apparatuses (2-i); and
   (b) determining an operation of selecting one of the possible signal transmission routes in the network node apparatus (2-i) itself based on said network QoS information (q, Q) being managed by the network node apparatus (2-i) itself.

2. A network managing method according to claim 1, **characterized in that**:

   said network QoS information (Q) is obtained by transmitting said inter-neighboring-node QoS information (q) between the neighboring node apparatuses (2-i) while accumulating said inter-neighboring-node QoS information (q); and
   said network QoS information (Q) is transmitted between the neighboring node apparatuses (2-i) as the information to be managed by the individual neighboring node apparatuses (2-i).

3. A network managing method according to claim 2, **characterized in that** said network QoS information (Q) is transmitted as stored in an overhead portion of a signal frame for SDH (Synchronous Digital Hierarchy), SONET (Synchronous Optical Network) or Digital Wrapper.

4. A network managing method according to claim 2 or 3, **characterized in that** said inter-neighboring-node QoS information (q) is transmitted as stored in an overhead portion of a signal frame for SDH (Synchronous Digital Hierarchy), SONET (Synchronous Optical Network) or Digital Wrapper.

5. A network managing method according to claim 2, **characterized in that** said network QoS information (Q) is transmitted using a main signal channel (51) and a sub-channel (52) established between the individual node apparatuses (2-i).

**6.** A network managing method according to claim 1,
**characterized in that** said inter-neighboring-node QoS information (q) is able to be manually updated.

**7.** A network managing method according to claim 1, **characterized in that** the individual node apparatuses (2-i) automatically collecting, from the neighboring node apparatuses (2-i), information needed for determining said inter-neighboring-node QoS information (q).

**8.** A network managing method according to claim 1, **characterized in that** unique ID (identification) information is assigned to each of the individual node apparatuses (2-i), and said unique ID information assigned to the individual node apparatus (2-i) is added to a signal to be transmitted to the neighboring node apparatus (2-i) .

**9.** A network managing method according to claim 8, **characterized in that** each of the node apparatuses (2-i) is responsive to the signal transmission signal from the neighboring node apparatus (2-i) to identify the individual signal transmission route in terms of a combination of plural pieces of said ID information, which have been sequentially added to the transmission signal as the transmission signal has been traveling around a succession of the node apparatuses (2-i) on the last-named signal transmission route.

**10.** A network managing method according to claim 9, **characterized in that** each of the node apparatuses (2-i) creates and manages combination information about combinations each of the identified signal transmission route and said network QoS information (Q) corresponding to the identified signal transmission route.

**11.** A network managing method according to claim 10, **characterized in that** each of the node apparatuses (2-i) selects, from the signal transmission routes being identified and managed by each said node apparatus (2-i) itself in terms of said combination information, an arbitrary signal transmission route, which satisfies a required network quality of service, as a substitute route, thereby making a redundancy setting of signal transmission route in the network (1).

**12.** A network managing method according to claim 10, **characterized in that** each of the node apparatuses (2-i) selects, from the signal transmission routes being identified and managed by each said node apparatus (2-i) itself in terms of said combination information, two or more different signal transmission routes as those for bi-directional communications, thereby setting an asymmetrical bi-directional signal transmission route in the network (1).

**13.** A network managing method according to claim 10, **characterized in that** each of the node apparatuses (2-i) selects, from the signal transmission routes being identified and managed by each said node apparatus (2-i) itself in terms of said combination information, two or more identical signal transmission routes as those for bi-directional communications, thereby setting a symmetrical bi-directional signal transmission route in the network (1).

**14.** A network managing method according to claim 10, **characterized in that** each of the node apparatuses (2-i) selects, from the signal transmission routes being identified and managed by each said node apparatus (2-i) itself in terms of said combination information, two or more different signal transmission routes as those for the same signal, thereby making a setting for broadcast communication.

**15.** A network managing method according to claim 10, **characterized in that** when a particular node apparatus (2-i) is removed from the network (1), such message is transmitted between the remaining node apparatuses (2-j, j ≠ i ), and at each of the remaining node apparatuses (2-j), only said combination information associated with the signal transmission routes passing through said removed node apparatus (2-i) is deleted.

**16.** A network managing method according to claim 10, **characterized in that** when a new node apparatus (2-(N+1)) is added to the network, each of the node apparatus (2-k) (k=1, 2, 3 ... (N+1)) re-executes said identifying of the signal transmission routes to recreate said combination information.

**17.** A network node apparatus for use in a network composed of plural node apparatuses (2-i), **characterized in that** said apparatus comprises:

a managing section (14) for managing network QoS (Quality of Service) information (Q) about quality of service for possible signal transmission routes in a network (1), said network QoS information (Q) being to be obtained as accumulation of inter-neighboring-node QoS (q) information about QoS between neighboring node apparatuses (2-i); and

a control section (13) for controlling an operation of selecting one of the possible signal transmission routes in said network node apparatus (2-i) itself based on said network QoS information (Q) being managed by said managing section (14).

18. A network node apparatus according to claim 17, **characterized in that** said managing section (14) includes:

an inter-neighboring-node QoS information arithmetic unit (221) for performing an accumulation arithmetic of both said inter-neighboring-node QoS information (q) between said node apparatus (2-i) itself and the neighboring node apparatuses (2-j) and said inter-neighboring-node QoS information (q) being managed by the neighboring node apparatuses (2-j) and received therefrom;

an inter-neighboring-node QoS information transmitting unit (211) for transmitting to the neighboring node apparatuses (2-j) said inter-neighboring-node QoS information (q) of said node apparatus (2-i) itself or the result of the accumulation arithmetic by said inter-neighboring-node QoS information arithmetic unit (221);

a network QoS information arithmetic unit (222) for obtaining said network QoS information (Q) by performing an accumulation arithmetic of said inter-neighboring-node QoS information (q) of said node apparatus (2-i) itself and said accumulation arithmetic result received from the neighboring node apparatuses (2-j); and

a network QoS information transmitting unit (212) for transmitting to the neighboring node apparatuses (2-j) said network QoS information (Q) obtained by said network QoS information arithmetic unit (222) or said network QoS information (Q) received from the neighboring node apparatuses (2-j).

19. A network node apparatus according to claim 18, **characterized in that** said network QoS information transmitting unit (212) is constructed so as to store and transmit said network QoS information (Q) in and from an overhead portion of a signal frame of a transmission system, suchasSDH (Synchronous Digital Hierarchy), SONET (Synchronous Optical Network) or Digital Wrapper.

20. A network node apparatus according to claim 18 or 19, **characterized in that** said inter-neighboring-node QoS information transmitting unit (211) is constructed so as to store and transmit said inter-neighboring-node QoS information (q) in and from an overhead portion of a signal frame of a transmission system, such as SDH (Synchronous Digital Hierarchy), SONET (Synchronous Optical Network) or Digital Wrapper.

21. A network node apparatus according to claim 18, **characterized in that** said network QoS information transmitting unit (212) transmits said network QoS information (Q) using a main signal channel (51) and a sub-channel (52) established between the individual node apparatuses (2-i).

22. A network node apparatus according to claim 18, **characterized in that** said managing section (14) has a setting unit (26) for manually setting said inter-neighboring-node QoS information (q) to update.

23. A network node apparatus according to claim 18, **characterized in that** said managing section (14) has a collecting unit (25) for automatically collecting, from the neighboring node apparatuses (2-j), information needed for determining said inter-neighboring-node QoS information (q).

24. A network node apparatus according to claim 17, **characterized in that** said managing section (14) has an ID (identification) information adding unit (311) for adding unique ID information, which is assigned to said node apparatus (2-i) itself, to a signal to be transmitted to the neighboring node apparatus (2-j).

25. A network node apparatus according to claim 24, **characterized in that** said managing section (14) has a route identifying unit (312) responsive to the signal transmission signal from the neighboring node apparatus (2-j) to identify the individual signal transmission route in terms of a combination of plural pieces of said ID information, which have been sequentially added to the transmission signal as the transmission signal has been traveling around a succession of the node apparatuses (2-i) on the last-named signal transmission route.

26. A network node apparatus according to claim 25, **characterized in that** said managing section (14) has a combination information creating/managing unit (23) for creating/managing combination information about combinations each of the identified signal transmission route and said network QoS information (Q) corresponding to the identified signal transmission route.

**27.** A network node apparatus according to claim 26, **characterized in that** said managing section (14) has a route setting unit (32) for selecting, from the signal transmission routes being created/managed by said combination information creating/managing unit (23) in terms of said combination information, an arbitrary signal transmission route, which satisfies a required network quality of service, as a substitute signal transmission route for providing desired communications service, thereby making a setting of signal transmission route in the network (1).

**28.** A network node apparatus according to claim 27, **characterized in that** said route setting unit (32) has redundant route setting means (321) for selecting, from the signal transmission routes being identified and managed by said combination information creating/managing unit (23) in terms of said combination information, an arbitrary signal transmission route, which satisfies a required network quality of service, as a substitute route, thereby making a redundancy setting of signal transmission route in the network (1).

**29.** A network node apparatus according to claim 27, **characterized in that** said route setting unit (32) has asymmetrical bi-directional communication setting means (323) for selecting, from the signal transmission routes being created and managed by said combination information creating/managing unit (23) in terms of said combination information, two or more different signal transmission routes as those for bi-directional communications, thereby setting an asymmetrical bi-directional signal transmission route in the network (1).

**30.** A network node apparatus according to claim 27, **characterized in that** said route setting unit (32) has symmetrical bi-directional communication setting means (322) for selecting, from the signal transmission routes being created/ managed by said combination information creating/managing unit (23) in terms of said combination information, two or more identical signal transmission routes as those for bi-directional communications, thereby setting a symmetrical bi-directional signal transmission route in the network (1).

**31.** A network node apparatus according to claim 27, **characterized in that** said route setting unit (32) has broadcast communication setting means (324) for selecting, fromthe signal transmission routes being created/managed by said combination information creating/managing unit (23) in terms of said combination information, two or more different signal transmission routes as those for the same signal, thereby making a setting for broadcast communication.

**32.** A network node apparatus according to claim 27, **characterized in that** said combination information creating/ managing unit (23) is responsive to removal of a particular node apparatus (2-i) from the network (1) for deleting only said combination information associated with the signal transmission routes passing through said removed node apparatus (2-i).

**33.** A network node apparatus according to claim 27, **characterized in that** said combination information creating/ managing unit (23) is responsive to addition of a new node apparatus (2-(N+1)) to the network (1) for re-executing said identifying of the signal transmission routes by said route identifying unit (312) to recreate said combination information.

**34.** A mesh-type network **characterized in that** a plurality of network node apparatuses (2-i) according to claim 17 are interconnected in a mesh pattern.

FIG. 1

# FIG. 2

1BYTE

Och-OH | Och-PE(Payload Envelope) | FEC Data

4  5  6

Och"Container"

7

# FIG. 3

FIG. 4

10:OPTICAL INTERFACE SECT.
11:OPTICAL TRANSPORT UNIT
12:SWITCH
110:NETWORK CONSTRUCTION CHANGE DETECTING SECT.
111:FRAME ASSEMBLING/DIASSEMBLING SECT.

NETWORK CONNECTION STATUS STORAGE SECT. 15

Q/q MANAGING/TRANSMITTING SECT. 14

SWITCH CONT. 13

2—1~2—9

# FIG. 5

**14: Q/q MANAGING/TRANSMITTING SECT.**

21(211, 212)

Q/q ARITHMETIC UNIT

ROUTE TABLE CREATING/MANAGING UNIT — 23

15

NETWORK CONNECTION STATUS STORAGE SECT.

22(221, 222)

Q/q TRANSMITTING/ RECEIVING UNIT

31

ROUTE RETRIEVING/ DETERMINING SUB-SECTION

311

ROUTE RETRIEVING UNIT

ID ASSIGNING SUB-UNIT

31

ROUTE ID IDENTIFYING SUB-UNIT

ROUTE DETERMINING UNIT

321 — REDUNDANT ROUTE SETTING SUB-UNIT

322 — SYMMETRICAL BI-DIRECTIONAL ROUTE SETTING SUB-UNIT

323 — ASYMMETRICAL BI-DIRECTIONAL ROUTE SETTING SUB-UNIT

324 — BROADCAST ROUTE SETTING SUB-UNIT

25 — q COLLECTING/ DETERMINING UNIT

26 — q SETTING UNIT

33 — NETWORK CONSTRUCTION CHANGE NOTIFYING UNIT

24

13 — SWITCH CONT.

32

EP 1 162 857 A2

# FIG. 6

# FIG. 7

# FIG. 8

OCCURRENCE OF FAULT

# FIG. 9

# FIG. 10

# FIG. 11

**FIG. 12**

# FIG. 13(A)

100

300(W)

WORK LINE

200

A

B

300(P)

PROTECTION LINE

# FIG. 13(B)

100

300(W)

WORK LINE

200

A

FAULT

B

300(P)

PROTECTION LINE

# FIG. 14(A)

IN NORMAL

# FIG. 14(B)

IN PRESENCE OF FAULT

# FIG. 14(C)

| WORK CHANNEL | | PROTECTION CHANNEL |
|---|---|---|
| 1 | ⟷ | 9 |
| 2 | ⟷ | 10 |
| 3 | ⟷ | 11 |
| 4 | ⟷ | 12 |
| 5 | ⟷ | 13 |
| 6 | ⟷ | 14 |
| 7 | ⟷ | 15 |
| 8 | ⟷ | 16 |

EP 1 162 857 A2

# FIG. 15

 :4F−BLSR  RING-TYPE NETWORK

 :1+1MSP LINE-TYPE NETWORK